# EUROPÄISCHE PATENTSCHRIFT

(11) **EP 2 408 620 B1**
(45) Veröffentlichungstag und Bekanntmachung des Hinweises auf die Patenterteilung: **10.09.2014**
(21) Anmeldenummer: 10710023.2
(22) Anmeldetag: 19.03.2010
(51) Int. Cl.: B32B 37/06, B32B 37/08, G06K 19/07

(54) **VORRICHTUNG UND VERFAHREN ZUM LAMINIEREN EINER MEHRSCHICHTIGEN THERMOPLASTISCHEN FOLIENANORDNUNG**
DEVICE AND METHOD FOR LAMINATING A MULTILAYER THERMOPLASTIC FILM ARRANGEMENT
DISPOSITIF ET PROCÉDÉ DE LAMINAGE D'UN ENSEMBLE STRATIFIÉ MULTICOUCHE THERMOPLASTIQUE

(30) Priorität: 20.03.2009 DE 102009014249
(43) Veröffentlichungstag der Anmeldung: 25.01.2012
(73) Patentinhaber: Smartrac IP B.V., 1077 XX Amsterdam (NL)
(72) Erfinder: MICHALK, Manfred, 99092 Erfurt (DE)
(74) Vertreter: advotec.
(86) Internationale Anmeldenummer: PCT/EP2010/053639
(87) Internationale Veröffentlichungsnummer: WO 2010/106178

(56) Entgegenhaltungen:
- WO-A1-2005/073907
- US-A- 3 029 178
- US-A1- 2003 008 118

## Beschreibung

Die Erfindung betrifft eine Vorrichtung zum Laminieren einer folienbandartigen mehrschichtigen thermoplastischen Folienanordnung nach den Merkmalen des Oberbegriffs des Anspruchs 1 und ein Verfahren zum Laminieren einer folienbandartigen mehrschichtigen thermoplastischen Folienanordnung nach den Merkmalen des Oberbegriffs des Anspruchs 9.

Die Herstellung von Smart Cards, Chipkarten und elektronischen Ausweisen, in deren innersten Schichtebenen Antennen, elektronische Bauelemente usw. eingebracht sind, verläuft im Allgemeinen in zwei Herstellungsschritten: Im ersten Schritt entsteht aus zwei oder mehreren Folien und nachfolgendem ersten Laminieren ein Vorlaminat, welches ein dünnes, großflächiges Laminat mit einer Vielzahl im speziellen Raster eingebrachten Antennen, elektronischen Bauelementen usw. darstellt.

Das Vorlaminat soll im Wesentlichen das Aussehen und die Eigenschaften einer Monoschichtfolie aufweisen. Je besser die Qualität des Vorlaminates ist, desto besser wird die Qualität des in einem zweiten Herstellungsschritt produzierten Endlaminates sein. Vor dem zweiten Laminationsschritt werden auf beiden Flächenseiten des Vorlaminates weitere, meist bedruckte Folien und darüber Schutzfolien angebracht. Nach der zweiten Lamination erfolgt das Trennen des Laminates in einzelne Smart Cards, Chipkarten, Ausweiskarten oder andere Formate oder Produkte.

Insbesondere Drahtantennen mit Drähten großen Durchmessers oder einer großen Anzahl von konzentrischen Antennenwindungen und weitere elektronische Bauelemente oder Module, d. h. auf Trägermaterial kontaktierte und mit Plasten umhüllte Halbleiterchips, mit großem Volumen und großer Dicke in Bezug zur endgültigen Kartendicke, können bei ungenügender Vorlamination die Qualität der endgültigen Karte verschlechtern.

Insbesondere bei thermoplastischen Materialien, die eine hohe Temperaturstabilität aufweisen und deren Erweichungsbereich in einem relativ schmalen Temperaturbereich liegt, können bei nichtoptimaler Vorlamination Drähte und Module auf glänzenden Kartenoberflächen nach der zweiten Lamination schemenhaft sichtbar sein. Ein solches Thermoplast ist zum Beispiel Polycarbonat (PC), welches insbesondere zur Herstellung von zuverlässigen Ausweiskarten verwendet wird.

Eine beispielhafte Ausführungsform für eine Laminiervorrichtung offenbart die Schrift US 3,029,178 A. Hierbei wird eine Halterung eingesetzt, in welcher zwischen einem unteren Halteelement und einem oberen Halteelement die zu laminierenden Schichten eingebracht werden können. Nach Einlegen der Halterung in die Laminiervorrichtung wird oberseitig mittels eines Pressstempels der erforderliche Druck aufgebracht, während unterseitig eine Erhitzung mittels Strahlungswärme wirkend auf das Werkzeugunterteil erfolgt. Nach dem Verschweißen der zu laminierenden Folien wird mittels eines Lüftungsgebläses eine Kühlung des Werkzeuges und der unteren und oberen Halteelemente bewirkt.

Zur Vorlamination und Lamination werden Vorrichtungen verwendet, die zwar eine hohe Temperaturpräzision in den Heiz- und Kühlsystemen aufweisen, die aber im Allgemeinen wärmeträge sind. Der Laminierzyklus benötigt einen Heizvorgang, bei dem die zu laminierende Folienanordnung auf die erforderliche Temperatur im Erweichungsbereich gebracht und dabei zusammen gepresst wird, und einen Kühlvorgang, bei dem unter Druck das Laminat abgekühlt wird. Dem Laminieren gleich gestellt sind das Planieren und das Prägen, bei denen in eine oder mehrere Folien mit Druck und Wärme und nachfolgender Abkühlung unter Druck auf den Folienoberflächen befindliche Drähte oder Leiterbahnen oder über die Oberfläche hinaus ragende Bauteile eben eingepresst oder Muster, Zeichen und/oder Rillen in das Laminat eingeprägt werden.

Mittels Laminatoren nach dem Stand der Technik werden eine Vielzahl von Folienanordnungen, die durch Laminierbleche (Pressbleche) getrennt sind und einen Folienstapel bilden, durch unten und oben auf den Stapel pressende Heiz- oder Kühltische erwärmt oder abgekühlt. Ein Stapel kann bis zu 15 Laminierbleche und bis zu 70 dünne Folien enthalten. Im Laminator können wiederum eine Vielzahl von Stapeln gleichzeitig laminiert werden, so dass sich eine hohe Produktivität ergibt.

Nachteilig ist, dass der Laminator mit seiner Vielzahl von Laminierblechen zum Aufheizen und Abkühlen sehr viel Energie verbraucht, dass die Heiz- und Kühlvorgänge träge sind und dass daher zu allen Zeitpunkten des Laminierens jede der im Laminierstapel befindlichen Folienanordnungen eine von der Nachbarfolienanordnung differierende Temperatur und damit einen unterschiedlichen Erweichungszustand aufweist. So ist zum Beispiel die am Heiztisch anliegende Folienanordnung weich, ehe die in Stapelmitte liegende Folienanordnung hinreichend erwärmt wurde. Ein weiterer Nachteil ergibt sich bei diesen Laminatoren durch das notwendige Hantieren der Laminierbleche, um einerseits die Laminate zu entnehmen und andererseits neue Folienanordnungen zwischen die Laminierbleche zu legen. Manuell oder maschinell sind diese Be- und Entladevorgänge sehr aufwändig.

Ein weiterer Nachteil tritt vor allem bei der Lamination infolge der Erwärmung von stark schrumpfenden Materialien, wie zum Beispiel PC, auf. Entweder erfolgt die Kühlung der Laminierstapel in der Heizpresse unter Beibehaltung oder Erhöhung des Laminierdruckes, um dem Schrumpfen zumindest teilweise entgegen zu wirken; dann halbiert sich die Produktivität des Laminators und es erhöht sich der Energieaufwand, oder der Pressdruck wird aufgehoben und die Laminierstapel werden von der Heiz- in die Kühlpresse verschoben mit dem Ergebnis, dass die heißen Laminate sofort schrumpfen.

Bei alternativen Laminatorvorrichtungen befindet sich jeweils nur eine Folienanordnung in der Heiz- bzw. Kühlpresse und die Folienanordnung wird als Band oder bandartig durch den Laminator gefördert.

Eine dieser alternativen Laminatorvorrichtungen ist als Schmalbandanordnung ausgelegt. Nachteilig bei dieser Vorrichtung ist, dass die Folienanordnung in beidseitig mitlaufende Stahlbänder eingelegt ist und der Laminator aufgrund seiner Konstruktion nicht in der Lage ist, große Folienflächen und Folienanordnungen mit unterschiedlichen Rasterschritten und Breiten zu laminieren.

Bei einem weiteren Bandlaminator werden die Folienanordnungen in beidseitig mitlaufenden Releasefolienbändern durch die Anlage geführt.

Nachteilig ist, dass der Vorschubschritt sich durch die größte zu erwartende künftige Laminatlänge zusätzlich einem technisch bedingten Abstand zwischen Heiz- und Kühlpresse ergibt, so dass bei Fertigung kleiner Laminatformate entweder erhebliche Verlustmengen an thermoplastischer Folie anfallen oder die Folienanordnungen zuvor geheftet, in Teilformate getrennt und in definierten Abständen auf die Releasefolien abgelegt werden müssen.

Die Schrift US 2003/0008118 A1 offenbart ein weiteres Verfahren zur Herstellung von laminierten, Antennen oder dergleichen enthaltenden Karten. Es wird vorgeschlagen eine Mehrzahl von Karten nebeneinander anzuordnen, wobei die hierzu erforderlichen elektronischen Elemente in einem entsprechenden Raster auf einer Trägerfolie aufgebracht sind. Zur Sicherstellung einer zuverlässigen randseitigen Laminierung der einzelnen Karte wird die Trägerfolie im Kartenraster derart ausgestanzt, dass lediglich kleinste verbindende Stege in den vier Ecken der herzustellenden Karte verbleiben, ansonsten jedoch ein hinreichender Abstand zum Rand der eigentlichen Karte vorhanden ist. Bei der nachfolgenden Laminierung mit Ober- und Unterschicht wird die Trägerfolie mit der elektronischen Komponente umlaufend zuverlässig eingeschweißt.

Die Schrift EP 1 452 297 A1 offenbart eine Vorrichtung zum Laminieren einer thermoplastischen Folienanordnung, umfassend eine Heizpresse mit aufheizbaren Pressblechen und eine Kühlpresse.

Der Erfindung liegt die Aufgabe zugrunde, eine Vorrichtung und ein Verfahren zum produktiven und kostengünstigen Laminieren von folienbandartigen mehrschichtigen thermoplastischen Folienanordnungen anzugeben.

Die Aufgabe wird erfindungsgemäß gelöst durch eine Vorrichtung zum Laminieren einer folienbandartigen mehrschichtigen thermoplastischen Folienanordnung mit den Merkmalen des Anspruchs 1 und ein Verfahren zum Laminieren einer folienbandartigen mehrschichtigen thermoplastischen Folienanordnung mit den Merkmalen des Anspruchs 9.

Vorteilhafte Ausgestaltungen der Erfindung sind Gegenstand der Unteransprüche.

Eine Vorrichtung zum Laminieren einer folienbandartigen mehrschichtigen thermoplastischen Folienanordnung, welche aus einem thermoplastischen Folienband oder aus einer Mehrzahl folienbandartig aufgereihter blattartiger Folienanordnungen gebildet ist, wobei die Folienanordnung mindestens in Vorschubrichtung in gleichmäßige Rasterschritte eingeteilte Flächenstücke aufweist, die durch Gitter beabstandet sind und wobei die Lamination unter Druck und Erhitzung eines Laminierabschnittes der Folienanordnung auf eine Temperatur im Erweichungsbereich der Thermoplaste und anschließender Abkühlung des erhitzten Laminierabschnittes unter Druck stattfindet, umfasst erfindungsgemäß aufheizbare Pressbleche und Kühlflächen, wobei eine Breite dieser Pressbleche und Kühlflächen größer oder gleich einer Breite der Folienanordnung ist, wobei die Folienanordnung in ihrer Lage zu den Pressblechen so angeordnet ist, dass Pressblechränder in Gittermitte liegen und mit einem Abstand bis zu 3 mm neben einem Pressblechrand und im gleichen Gitter beginnend die Kühlflächen angeordnet sind, wobei eine Länge der Kühlflächen größer oder gleich einer Länge der Pressbleche ist, wobei je ein Pressblech und je eine Kühlfläche beidseitig der Folienanordnung angeordnet sind, wobei die Pressbleche an durch erste Presstische bewegbaren oder gestützten Pressblechhalteblöcken befestigt sind, in welchen jeweils eine Kühlzone angeordnet ist und wobei die Kühlflächen Bestandteil von durch zweite Presstische bewegbaren oder gestützten Kühlblöcken sind. Die Kühlblöcke sind vorzugsweise ölgekühlt, wassergekühlt und/oder luftgekühlt. Die Presstische sind bevorzugt hydraulisch, elektrisch und/oder pneumatisch bewegbar. Die Kühlzonen in den Pressblechhalteblöcken sind zweckmäßigerweise ölgekühlt, wassergekühlt und/oder luftgekühlt. Insbesondere durch die Kühlzonen ist eine Verbesserung einer Wärmeorganisation der Pressbleche erzielbar, wodurch die Folienanordnung mit optimalen Temperaturen und energieeffizient laminierbar ist.

Durch die Kühlzonen in den Pressblechhalteblöcken ist ein Zusammenpressen und Aufheizen der Folienanordnung und nachfolgend zumindest ein Vorkühlen der Folienanordnung bis unter einen Erweichungspunkt des thermoplastischen Materials ermöglicht, ohne die Pressbleche vor einem ausreichenden Abkühlen der Folienanordnung zu öffnen. Dadurch ist ein unerwünschtes Schrumpfen der erwärmten Folienanordnung, welches zu deren Unbrauchbarkeit führen könnte, verhindert.

Ein Transport der Folienanordnung erfolgt, im Gegensatz zum Stand der Technik, ohne Metallbänder oder Metallplatten. Dadurch ist eine Behinderung einer Heiz- bzw. Kühlenergie durch die Metallbänder oder - platten verhindert, wodurch sehr kurze Laminierzyklen ermöglicht sind.

Des Weiteren ist für eine jeweilige Erzeugniskonfiguration nur je ein produktspezifisches oberes und unteres Pressblech notwendig, so dass das Laminieren sehr flexibel und mit sehr geringen Vorrichtungskosten erfolgen kann, da bei einer Produktumstellung nur die Pressbleche anzupassen sind.

Unter dem Begriff Laminieren sind ebenfalls ein Prägen und ein Planieren der Folienanordnung zu verstehen. Die Vorrichtung ist daher auch nutzbar, um Leiterbahnen und/oder elektronische Bauelemente in ein Substrat einzupressen und einzuplanieren, so dass Oberflächen der Leiterbahnen und/oder der elektronischen Bauelemente plan mit einer Oberfläche des Substrates abschließen. Des Weiteren ist mit der Vorrichtung eine sogenannte Releasefolie auf das Substrat ein- oder beidseitig aufbringbar und mit diesem verbindbar. Auch Zeichen und/oder Konturen sind mittels der Vorrichtung in ein Substrat oder eine Folie oder eine Folienanordnung einprägbar.

Pressblechhalteblockpaare und Kühlblockpaare sind auf vorgebbare Temperaturen heiz- oder kühlbar, und ein Pressdruck der Pressbleche und/oder der Kühlflächen gegeneinander bzw. auf die Folienanordnung sowie ein zeitlicher Verlauf des Pressdrucks sind vorzugsweise vorgebbar. Mit der Vorrichtung sind Folienanordnungen großer Breite (bis zu 650 mm) und unterschiedlicher Rastergröße schrittweise laminierbar. Die Pressbleche und die Kühlflächen sind durch ein Zusammenfahren auf die Folienanordnung pressbar und durch ein Auseinanderfahren von der Folienanordnung abhebbar. Je nach beabsichtigter konstruktiver Gestaltung der Vorrichtung ist nur ein Presstisch oder es sind beide Presstische eines Paares bewegbar. Als Alternative ist eine gesamte Transportebene der Folienanordnung senkrecht zu einer Oberfläche der Folienanordnung bewegbar, um zu erreichen, dass nur ein Presstisch eines Presstischpaares anzutreiben ist.

Ein aufgeheizter und danach bereits vorgekühlter Laminierabschnitt ist auf kürzestem Wege und sehr schnell zwischen die Kühlflächen zu verschieben. Die große Kühlflächenlänge sichert ein vollständiges Abkühlen des Laminates. Da nur ein Pressblech bzw. Pressblechpaar zu erhitzen ist und keine Pressbleche oder Pressbänder mit der Folienanordnung mitzuführen sind, geschieht die Erwärmung der Folienanordnung auf eine geforderte Temperatur sehr rasch und mit geringem Energieaufwand. Die Abkühlung erfolgt ebenfalls sehr rasch, da keine Energiespeicher außer der erhitzten Folienanordnung selbst vorhanden sind.

Vorzugsweise ist die Länge der Pressbleche in Abhängigkeit von einer Länge und einer Anzahl der in einem Schritt zu laminierenden Rasterschritte vorgebbar, d. h. die Pressbleche an den Pressblechhalteblöcken sind rastertypspezifisch und einfach wechselbar. Die von Gittermitte zu Gittermitte langen Pressbleche sichern ein sicheres Laminieren der Folienanordnung ohne überschneidendes Aufsetzen der Pressbleche.

In einer vorteilhaften Ausführungsform ist zwischen dem Pressblechhalteblock und dem Pressblech eine Heizplatte angeordnet. In einer weiteren vorteilhaften Ausführungsform ist zwischen dem Pressblechhalteblock und dem Pressblech ein Speicherblech angeordnet. Vorzugsweise ist zwischen dem Speicherblech und dem Pressblechhalteblock oder zwischen der Heizplatte und dem Pressblechhalteblock oder zwischen dem Pressblech und dem Pressblechhalteblock eine Isolierlage angeordnet. Dadurch ist sowohl bei einem direkt geheizten als auch bei einem indirekt geheizten Pressblech eine Verbesserung einer Wärmeorganisation des Pressbleches erzielbar, wodurch die Folienanordnung mit optimalen Temperaturen und energieeffizient laminierbar ist.

Zu diesem Zweck sind vorzugsweise eine Dicke und/oder ein Materialtyp des Pressbleches, der Isolierlage und/oder des Speicherblechs entsprechend einer Laminieraufgabe vorgebbar und das Pressblech, die Isolierlage und/oder das Speicherblech auswechselbar. Dadurch ist eine Energiemenge in einem Heizfall so vorgebbar, dass nur eine benötigte Energie und nur für eine gegebene Zeitdauer zur Verfügung steht, um Grenzflächen zu laminierender Folien so zu erwärmen, dass eine sichere Lamination ermöglicht ist. Die Erhitzung einer inneren Folie, meist eine relativ dicke Kernfolie bzw. eine Substratfolie, auf Pressblechtemperatur zum Zeitpunkt des Aufsetzens des Pressbleches ist dadurch vermieden, da die Pressblechtemperatur mit Aufsetzen auf die Folienanordnung absinkt unter Erwärmung äußerer Folienschichten.

Durch geeignete Wahl der Dicke und eines spezifischen Wärmewiderstandes der Isolierlage auf dem gekühlten Pressblechhalteblock ergibt sich eine gezielte zusätzliche Abkühlung des Pressbleches und damit des Laminierabschnittes unmittelbar nach Erhitzen der äußeren Folien. Nach Ende eines Heizzyklus ist der Laminierabschnitt zwischen den Pressblechen in einer ersten Kühlphase bereits auf Temperaturen unter den Erweichungsbereich des zu laminierenden Thermoplastes abgekühlt und ist nach Weitertransport zwischen die Kühlblöcke auf eine gewünschte Temperatur weiter abkühlbar.

In einer vorteilhaften Ausführungsform ist auf dem Kühlblock gegenüberliegend der Kühlfläche eine zum Kühlblock hin thermisch isolierte Heizplatte angeordnet. Die Kühlblöcke sind zweckmäßigerweise unter die Pressblechhalteblöcke verschiebbar. In einer weiteren vorteilhaften Ausführungsform ist der Pressblechhalteblock um eine Drehachse parallel zu einer Oberfläche der Folienanordnung und senkrecht zur Vorschubrichtung um 180° drehbar gelagert und vorzugsweise ist an gegenüberliegenden Seiten des Pressblechhalteblocks je ein Pressblech angeordnet und zweckmäßigerweise sind im Pressblechhalteblock zwei Kühlzonen angeordnet. In einer weiteren Ausführungsform sind an den die Pressblechhalteblöcke pressenden ersten Presstischen an einer zu den Pressblechhalteblöcken weisenden Seite Heizplatten angeordnet. Durch diese vorteilhaften Ausführungsformen ist eine temporäre indirekte Aufheizung des Pressblechs bzw. der Pressbleche an externen Heizplatten ermöglicht, wodurch eine Verringerung einer Dauer und einer Höhe eines Energieeintrages in einen Laminierabschnitt erreichbar ist.

Die Heizplatten der Vorrichtung sind vorzugsweise elektrisch geheizt und/oder mittels einer temperierten Flüssigkeit geheizt.

Vorzugsweise weisen die Pressbleche eine Mehrzahl von in Reihen quer zur Vorschubrichtung angeordnete Rasternocken auf, welche zur Folienanordnung hin ausgerichtet sind, wobei ein Abstand der Reihen einem Abstand eines Rasterschrittes entspricht. Bevorzugt weisen die Rasternocken eine Breite von 0,5 mm bis 8 mm und eine Höhe von 0,01 mm bis 0,4 mm auf.

Die Breite der Rasternocken ist wesentlich kleiner als die Gitterbreite zwischen den beabsichtigten Flächenstücken der Folienanordnung und die Höhe der Rasternocken ist kleiner 10 % einer Laminatdicke. In Vorschubrichtung beginnt die Pressblechlänge mit einer Rasternocke, weitere Rasternocken befinden sich in jeder Gittermitte und das Pressblechende wird mit einer Rasternocke abgeschlossen. Weisen beide Pressbleche eines Pressblechpaares Rasternocken auf, so ist es vorteilhaft, wenn sich die Rasternocken kongruent gegenüber stehen. Die Rasternocken erzeugen nutartige Vertiefungen in der laminierten Folienanordnung.

Die Rasternocken als stegartige Erhebungen in den Pressblechen und die nutartigen Vertiefungen in den Laminaten bringen folgende Vorteile: Beim Aufsetzen der Pressbleche auf die Folien eines Laminierabschnittes werden ggf. nicht glatt aufliegende äußere Folien bzw. Deckfolien gestrafft, des Weiteren ist mit einfachen Mitteln kontrollierbar, ob die Pressbleche exakt gegeneinander auf den Pressblechhalteblöcken angeordnet sind und ob ein Vorschub der Folienanordnung genau um einen Laminierabschnitt erfolgt. Bei richtigem Vorschub liegt die in Bandrichtung letzte Rasternocke exakt in der ersten Nut des zuvor laminierten Laminierabschnittes.

Bei einem Endlaminieren kann aus Vorlaminaten mit Nut besser Luft zwischen Vorlaminat und Auflagefolien entweichen. Laminierte Folienanordnungen mit Nut lassen sich besser aufwickeln. Sind Laminate für Passbücher, faltbare Plastikkarten und ähnliche knickbare Erzeugnisse herzustellen mit einer oder mehreren, gegebenenfalls bis 8 mm breiten und bis zu 0,4 mm tiefen Nuten in einem Bereich eines künftigen Buchrückens (hinge) oder eines Knickes, sind diese Nuten durch entsprechende Gestaltung der stegartigen Erhebungen in den Pressblechen beim Laminieren ebenfalls einprägbar.

Vorzugsweise weisen die Pressbleche zur Folienanordnung weisende zeichenartige Erhebungen auf, bevorzugt mit einer Höhe von 0,01 mm bis 0,3 mm. Dadurch sind in die Folienanordnung zeichenartige Vertiefungen einprägbar, welche beispielsweise Erzeugniskennungen oder Sicherheitsmerkmale darstellen können.

Bevorzugt sind entlang der Folienanordnung eine Mehrzahl von Klemmstückpaaren angeordnet. Mittels dieser Klemmstückpaare ist die Folienanordnung in der Transportebene haltbar und durch eine Bewegung der Klemmstückpaare in Vorschubrichtung transportierbar.

In einer vorteilhaften Ausführungsform ist in Vorschubrichtung vor den Pressblechen eine Haltebandzuführvorrichtung angeordnet und in einer weiteren vorteilhaften Ausführungsform ist in Vorschubrichtung nach den Kühlflächen eine Haltebandabführvorrichtung angeordnet.

Um ein Ankleben der laminierten Folienanordnung an den Pressblechen zu vermeiden, ist es zweckmäßig, beidseitig auf die Folienanordnung ein dünnes, temperaturstabiles Halteband, ein so genanntes Releaseband, aufzulegen und dieses Halteband nach einem Laminierdurchlauf durch Aufwickeln zu entfernen.

Ebenso kann es zweckmäßig sein, bei einer Herstellung von Vorlaminaten als verlorenes Halteband oder Releaseband beidseitig ein dünnes, grobmaschiges Vlies aus Naturfasern auf die Folienanordnung vor dem Vorlaminieren aufzulegen.

Das sehr dünne, grobmaschige Vlies aus Naturfasern mit einem Flächengewicht von kleiner 10 g/m² und einer Faserlänge größer 2 mm und einem Faserdurchmesser bis zu 30 µm ist dann zwar in die Deckfolien bzw. in äußere Schichten eines Substrates der Folienanordnung einlaminiert, jedoch ist eine Haftwirkung der Folienanordnung an den Pressblechen signifikant verringert.

Eine mehrschichtige thermoplastische laminierte Folienanordnung, welche aus einem thermoplastischen Folienband oder aus einer Mehrzahl folienbandartig aufgereihter blattartiger Folienanordnungen gebildet ist, weist mindestens in Vorschubrichtung in gleichmäßige Rasterschritte eingeteilte Flächenstücke auf, die durch Gitter beabstandet sind.

Die Folienanordnung weist ein- oder beidseitig nutartige Vertiefungen auf, welche in Gittermitten quer zu einer Längsausdehnung der Folienanordnung angeordnet sind, wobei die Folienanordnung ein- oder beidseitig zeichenartige Vertiefungen aufweist und/oder wobei zur Stabilisierung und Verschleißverringerung beidseitig der Folienanordnung jeweils ein sehr dünnes und grobmaschiges Vliesband vollständig oder nahezu vollständig in die Folienanordnung einlaminiert ist. Die nutartigen Vertiefungen bilden beispielsweise einen Rücken oder eine Knickstelle einer faltbaren Kartenfläche. Die zeichenartigen Vertiefungen können beispielsweise Erzeugniskennungen oder Sicherheitsmerkmale darstellen.

Das als verlorenes Halteband oder Releaseband ausgebildete Vliesband ist als ein dünnes, grobmaschiges Vlies aus Naturfasern beidseitig auf die Folienanordnung vor dem Laminieren aufgelegt.

Das sehr dünne, grobmaschige Vlies aus Naturfasern, beispielsweise Abacca, mit einem Flächengewicht von kleiner 10 g/m² und einer Faserlänge größer 2 mm und einem Faserdurchmesser bis zu 30 µm ist dann zwar in die Deckfolien bzw. in äußere Schichten eines Substrates der Folienanordnung einlaminiert, jedoch ist eine Haftwirkung der Folienanordnung während des Laminierens an den Pressblechen signifikant verringert.

In einem Verfahren zum Laminieren einer folienbandartigen mehrschichtigen thermoplastischen Folienanordnung, welche aus einem thermoplastischen Folienband oder aus einer Mehrzahl folienbandartig aufgereihter blattartiger Folienanordnungen gebildet ist, wobei die Folienanordnung mindestens in Vorschubrichtung in gleichmäßige Rasterschritte eingeteilte Flächenstücke aufweist, die durch Gitter beabstandet sind, wird die Folienanordnung unter Druck auf eine Temperatur im Erweichungsbereich der Thermoplaste erhitzt und anschließend unter Druck abgekühlt.

Erfindungsgemäß wird ein Laminierabschnitt der Folienanordnung mittels an beiden Seiten der Folienanordnung angeordneter aufgeheizter Pressbleche erwärmt und zusammengepresst, wobei zumindest ein Pressblech in Richtung der Folienanordnung bewegt wird und anschließend werden die Pressbleche durch in den Pressblechhalteblöcken angeordnete Kühlzonen gekühlt, wobei der erwärmte Laminierabschnitt mittels der Pressbleche zusammengepresst und zumindest vorgekühlt wird. Durch die Kühlzonen in den Pressblechhalteblöcken wird ein Zusammenpressen und Aufheizen der Folienanordnung und nachfolgend zumindest ein Vorkühlen der Folienanordnung bis unter einen Erweichungspunkt des thermoplastischen Materials ermöglicht, ohne die Pressbleche vor einem ausreichenden Abkühlen der Folienanordnung zu öffnen. Dadurch wird ein unerwünschtes Schrumpfen der erwärmten Folienanordnung, welches zu deren Unbrauchbarkeit führen könnte, verhindert. Die in den Pressblechhalteblöcken angeordneten Kühlzonen sind vorzugsweise ölgekühlt, wassergekühlt und/oder luftgekühlt. Ein Transport der Folienanordnung erfolgt, im Gegensatz zum Stand der Technik, ohne Metallbänder oder Metallplatten. Dadurch ist eine Behinderung einer Heiz- bzw. Kühlenergie durch die Metallbänder oder -platten verhindert, wodurch sehr kurze Laminierzyklen ermöglicht sind. Des Weiteren wird für eine jeweilige Erzeugniskonfiguration nur je ein produktspezifisches oberes und unteres Pressblech benötigt, so dass das Laminieren sehr flexibel und mit sehr geringen Vorrichtungskosten erfolgen kann, da bei einer Produktumstellung nur die Pressbleche anzupassen sind.

Vorteilhafterweise wird der erwärmte und danach bereits vorgekühlte Laminierabschnitt während des abschließenden Kühlens mittels an beiden Seiten der Folienanordnung angeordneter Kühlflächen zusammengepresst und gekühlt, wobei zumindest eine Kühlfläche in Richtung der Folienanordnung bewegt wird. Soll eine Laminierkapazität erhöht werden, können zwei oder drei Pressblech Kühlflächenpaareinheiten in Vorschubrichtung nacheinander angeordnet werden. Eine Vorschubschrittlänge der Folienanordnung erhöht sich entsprechend auf zwei oder drei Laminierabschnitte. Vorzugsweise wird ein Pressdruck der Pressbleche und/oder der Kühlflächen gegeneinander bzw. auf die Folienanordnung und ein zeitlicher Verlauf des Pressdrucks vorgegeben, d. h. der Pressdruck ist während des Laminierens veränderbar und anpassbar, so dass stets ein optimaler Pressdruck zur Verfügung steht.

Die Pressbleche und die Kühlflächen werden auf vorgegebene Temperaturen aufgeheizt bzw. gekühlt, und ein Pressdruck gegeneinander bzw. auf die Folienanordnung wird vorgegeben. Die Pressbleche und die Kühlflächen werden durch ein Zusammenfahren auf die Folienanordnung gepresst und durch ein Auseinanderfahren von der Folienanordnung abgehoben.

Die Folienanordnung wird sehr rasch und mit einem geringen Energieaufwand erwärmt und danach effizient abgekühlt, wobei eine Schädigung der Folienanordnung zwischen Erwärmung und Abkühlung, beispielsweise eine Schrumpfung verhindert wird, da der aufgeheizte und danach bereits vorgekühlte Laminierabschnitt auf kürzestem Wege und sehr schnell zwischen die Kühlflächen verschoben wird.

Vorzugsweise verbleibt die Folienanordnung während des Laminierens in einer Transportebene, so dass eine Beschädigung der Folienanordnungen durch beispielsweise durch Verformungen, zum Beispiel ein Abknicken der Folienanordnung, vermieden werden.

Bevorzugt werden die an Pressblechhalteblöcken angeordneten Pressbleche mittels senkrecht zu einer Oberfläche der Folienanordnung beweglicher und hydraulisch und/oder elektrisch und/oder pneumatisch angetriebener erster Presstische an die Folienanordnung gepresst und die an Kühlblöcken angeordneten Kühlflächen werden vorzugsweise mittels senkrecht zur Oberfläche der Folienanordnung beweglicher und hydraulisch und/oder elektrisch und/oder pneumatisch angetriebener zweiter Presstische an die Folienanordnung gepresst, so dass eine Presskraft optimal eingestellt werden kann und eine optimale Pressung der Folienanordnung während des Laminierens sichergestellt ist.

In einer bevorzugten Ausführungsform wird die Folienanordnung mittels einer Mehrzahl von Klemmstückpaaren, welche entlang der Folienanordnung angeordnet sind, in der Transportebene gehalten und durch eine Bewegung der Klemmstückpaare in Vorschubrichtung wird die Folienanordnung in Vorschubrichtung transportiert.

Die Pressbleche können auch mittels zwischen den Pressblechen und den Pressblechhalteblöcken angeordneter Heizplatten aufgeheizt werden. In einer weiteren vorteilhaften Ausführungsform werden die Pressbleche durch ein temporäres Aufsetzen auf an den Kühlblöcken und/oder an den ersten Presstischen angeordnete Heizplatten aufgeheizt und durch in den Pressblechhalteblöcken angeordnete, ölgekühlte, wassergekühlte und/oder luftgekühlte Kühlzonen gekühlt, wobei vorzugsweise die Kühlung der Pressbleche mittels zwischen Pressblech und Pressblechhalteblock angeordneter Isolierlagen zeitlich verzögert wird und bevorzugt zwischen den Pressblechen und den Isolierlagen angeordnete Speicherbleche zusätzlich zu den Pressblechen eine durch indirektes Heizen übertragene Wärmemenge speichern. Dadurch wird ein Zusammenpressen und Aufheizen der Folienanordnung und nachfolgend zumindest ein Vorkühlen der Folienanordnung ermöglicht.

In einer vorteilhaften Ausführungsform werden nach dem Erwärmen und Zusammenpressen des Laminierabschnitts und einem nachfolgenden Zusammenpressen und Vorkühlen mittels der Pressbleche in einem ersten Schritt die an den Pressblechhalteblöcken befestigten Pressbleche mittels der ersten Presstische auseinander gefahren, die Kühlblöcke entgegen der Vorschubrichtung zum erwärmten Laminierabschnitt und unter die Pressbleche verschoben und mittels der ersten Presstische und der daran angeordneten Pressblechhalteblöcke und Pressbleche die Kühlflächen auf den Laminierabschnitt aufgepresst, wobei die Pressbleche auf Heizplatten, welche auf den Kühlblöcken gegenüberliegend der Kühlfläche angeordnet sind, aufgepresst und aufgeheizt werden. In einem zweiten Schritt werden die an den Pressblechhalteblöcken befestigten Pressbleche mittels der ersten Presstische erneut auseinander gefahren und die noch zangenartig auf dem Laminierabschnitt aufgesetzten Kühlblöcke werden unter Mitnahme der Folienanordnung um einen Laminierabschnitt in Vorschubrichtung verschoben. Dadurch sind eine optimale indirekte temporäre Aufheizung der Pressbleche, eine optimale Kühlung des Laminierabschnitts und ein optimaler Transport der Folienanordnung realisierbar.

In einer weiteren vorteilhaften Ausführungsform wird der Laminierabschnitt mittels der an den Pressblechhalteblöcken angeordneten Pressbleche erwärmt und zusammengepresst und danach weiterhin zusammengepresst und vorgekühlt, wobei die Pressblechhalteblöcke an gegenüberliegenden Seiten je ein Pressblech aufweisen, wobei die ersten Pressbleche auf die Folienanordnung aufgepresst werden und die den Presstischen und den daran angeordneten Heizplatten zugewandten zweiten Pressbleche mittels der Heizplatten aufgeheizt werden. Danach werden sowohl die ersten Pressbleche als auch die Kühlflächen mittels der ersten Presstische und der zweiten Presstische auseinander gefahren, die Pressblechhalteblöcke werden jeweils um 180° um eine Drehachse parallel zur Oberfläche der Folienanordnung und senkrecht zur Vorschubrichtung gedreht und gleichzeitig wird die Folienanordnung mittels der Klemmstückpaare um einen Laminierabschnitt in Vorschubrichtung bewegt. Danach werden die zweiten Pressbleche und die Kühlflächen wieder auf die Folienanordnung aufgepresst.

Sehr vorteilhaft ergibt sich dadurch eine hohe Produktivität des Laminierens bei exakt dosiertem Wärmeeintrag in das Laminat und eine Vorkühlung des Laminates direkt anschließend an eine kurze Aufheizphase bei geringster möglicher Erwärmung der Kernschicht des Laminates und bei geringster mechanischer Belastung der Folienanordnung. Der Energieverbrauch ist minimiert. Die Folienanordnung wird beim Aufheizen und Abkühlen stets und mit geringen Toleranzen in der Transportebene gehalten.

In einer weiteren vorteilhaften Ausführungsform wird der Laminierabschnitt mittels der an den Pressblechhalteblöcken angeordneten Pressbleche erwärmt und zusammengepresst und danach weiterhin zusammengepresst und abgekühlt, wobei die Pressblechhalteblöcke an gegenüberliegenden Seiten je ein Pressblech aufweisen, wobei die ersten Pressbleche auf die Folienanordnung aufgepresst werden und die den ersten Presstischen und den daran angeordneten Heizplatten zugewandten zweiten Pressbleche mittels der Heizplatten aufgeheizt werden. Danach werden die ersten Pressbleche mittels der ersten Presstische auseinander gefahren, die Pressblechhalteblöcke jeweils um 180° um eine Drehachse parallel zur Oberfläche der Folienanordnung und senkrecht zur Vorschubrichtung gedreht und gleichzeitig die Folienanordnung mittels der Klemmstückpaare um einen Laminierabschnitt in Vorschubrichtung bewegt. Danach werden die zweiten Pressbleche wieder auf die Folienanordnung aufgepresst. Diese Ausführungsform ist vorteilhaft einsetzbar auch für das Laminieren von gehefteten Folienabschnitten, für geringe Produktionsvolumina und für einen Testbetrieb.

Vorzugsweise wird vor dem Laminieren beidseitig auf die Folienanordnung ein dünnes, temperaturstabiles Halteband, ein so genanntes Releaseband aufgebracht, um ein Ankleben der laminierten Folienanordnung an den Pressblechen zu vermeiden. Dieses Halteband wird nach dem Laminieren von der Folienanordnung wieder entfernt.

Ebenso kann es zweckmäßig sein, bei einer Herstellung von Vorlaminaten als verlorenes Halteband oder Releaseband beidseitig ein dünnes, grobmaschiges Vlies aus Naturfasern auf die Folienanordnung vor dem Vorlaminieren aufzulegen.

Das sehr dünne, grobmaschige Vlies aus Naturfasern mit einem Flächengewicht von kleiner 10 g/m² und einer Faserlänge größer 2 mm und einem Faserdurchmesser bis zu 30 µm ist dann zwar in die Deckfolien bzw. in äußere Schichten des Substrates der Folienanordnung einlaminiert, jedoch ist eine Haftwirkung der Folienanordnung an den Pressblechen signifikant verringert.

Ferner ist es zweckmäßig, unmittelbar beim Transport des Laminierabschnittes zwischen die aufgeheizten Pressbleche den Laminierabschnitt beidseitig über die gesamte Breite mittels wasserfeuchter Luft anzufeuchten. Es ergibt sich eine geringere Haftwirkung der Folien an den Pressblechen und die Gefahr der elektrostatischen Schädigung der elektronischen Schaltung wird verringert.

Ausführungsbeispiele der Erfindung werden im Folgenden anhand von Zeichnungen näher erläutert.

Darin zeigen:
- Figur 1: eine schematische Darstellung einer Folienanordnung in Draufsicht,
- Figur 2: eine schematische Schnittdarstellung einer Vorrichtung zum Laminieren,
- Figur 3: eine schematische Schnittdarstellung einer weiteren Ausführungsform einer Vorrichtung zum Laminieren,
- Figur 4: eine schematische Schnittdarstellung eines Pressblechhalteblocks mit einem indirekt heizbaren Pressblech,
- Figur 5a: eine schematische Schnittdarstellung einer Vorrichtung zum Laminieren während eines Kühlens eines Laminierabschnitts,
- Figur 5b: eine schematische Schnittdarstellung einer Vorrichtung zum Laminieren während eines Erwärmens eines Laminierabschnitts,
- Figur 6: eine schematische Schnittdarstellung einer weiteren Ausführungsform einer Vorrichtung zum Laminieren, und
- Figur 7: eine schematische Schnittdarstellung eines Pressblechs.

Einander entsprechende Teile sind in allen Figuren mit den gleichen Bezugszeichen versehen.

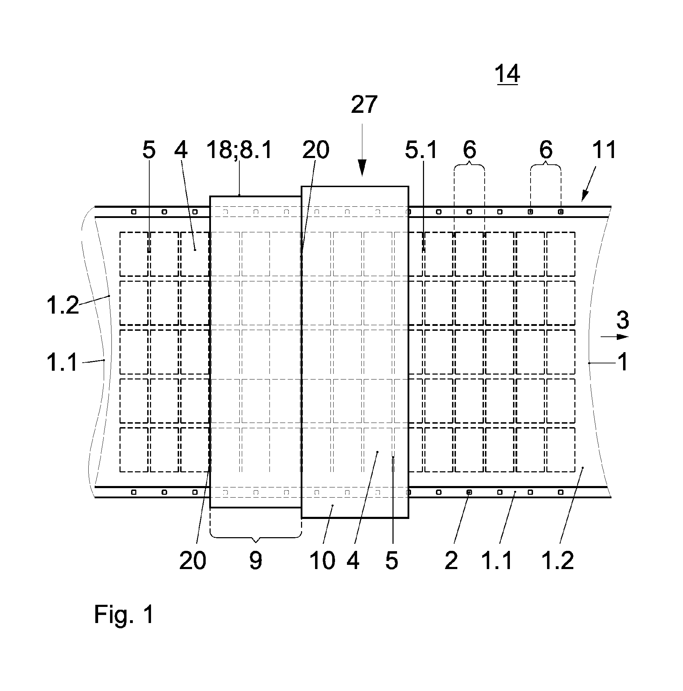

Figur 1 zeigt eine folienbandartige mehrschichtige thermoplastische Folienanordnung 1, welche aus einem thermoplastischen Folienband oder aus einer Mehrzahl folienbandartig aufgereihter blattartiger Folienanordnungen gebildet ist. Die dargestellte Folienanordnung 1 besteht beispielsweise aus einer 0,20 mm dicken Substratfolie 1.1 aus Polycarbonat (PC) und beidseitig aufgelegten Deckfolien 1.2 aus Polycarbonat mit einer Dicke von je 0,05 mm, wobei eine Breite der Deckfolien 1.2 im Beispiel 500 mm beträgt und die Substratfolie 1.1 eine Breite von 550 mm aufweist, so dass am Rand der Substratfolie 1.1 angebrachte Indexlöcher 2 nicht von den Deckfolien 1.2 überdeckt sind.

In der Substratfolie 1.1 sind in einem gleichförmigen Raster Schaltungen eingebracht zur Erzeugung von Chipkarten oder beliebiger anderer kartenähnlicher Erzeugnisse. Im Beispiel sind quer zu einer Vorschubrichtung 3 fünf Reihen kartengroßer, 85 mm langer Flächenstücke 4 angeordnet, die 10 mm beabstandet sind. Eine Breite der Flächenstücke 4 in Vorschubrichtung 3 beträgt 55 mm und ein Abstand voneinander, d. h. eine Breite eines Gitters 5, beträgt 5 mm. Dadurch weist ein Rasterschritt 6 eine Länge von 60 mm. Die Folienanordnung 1 wird in einer Transportebene 7 geführt oder bearbeitet.

Ebenen der Folienanordnung 1 beim Erwärmen und Abkühlen sind identisch. Ein für einen Laminiervorgang verwendetes erstes Pressblech 8.1 überdeckt in einer Breite vollständig und mit Überstand die Breite der Folienanordnung 1 und in Vorschubrichtung 3 beträgt eine Länge des ersten Pressbleches 8.1 drei Rasterschritte 6 plus 1 mm. Die drei Rasterschritte 6 entsprechen einem vorgesehenen Laminierabschnitt 9.

Das erste Pressblech 8.1 setzt vom Laminierabschnitt 9 nach außen gesehen jeweils 0,5 mm außerhalb einer Gittermitte 5.1 auf; bei exaktem Weitertransport der Folienanordnung 1 um einen Laminierabschnitt 9 ist dadurch in jeder dritten Gittermitte 5.1 ein 1 mm breiter Streifen doppelt laminiert. Eine Kühlfläche 10 setzt 1 mm entfernt des ersten Pressbleches 8.1 auf die laminierte Folienanordnung 1 auf. Die Kühlfläche 10 überdeckt im Beispiel ebenfalls die gesamte Breite der Folienanordnung 1 und ist in Vorschubrichtung 3 im Beispiel 210 mm lang. Im bereits laminierten Folienanordnungsbereich 11 sind durch Rasternocken 12 eingeprägte Vertiefungen 13 angeordnet.

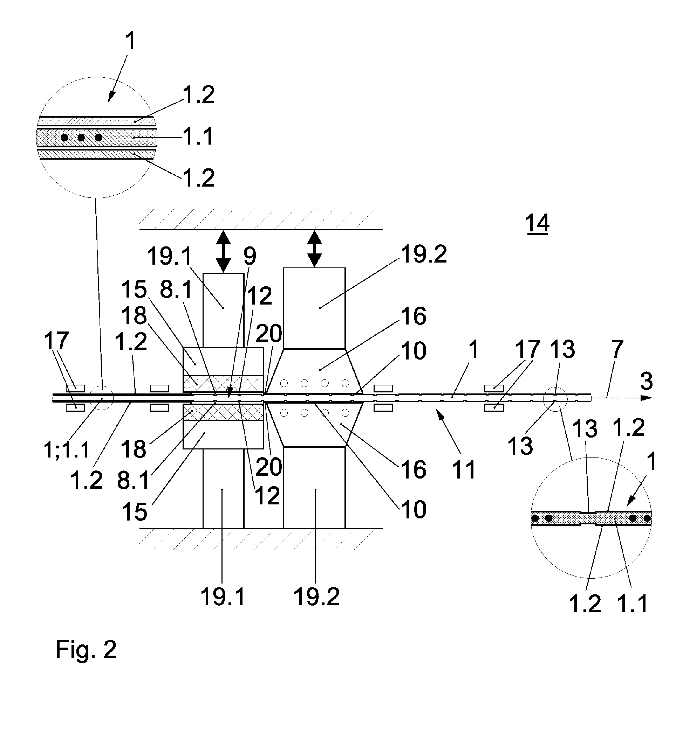

Etwa die gleiche Situation ist in Figur 2 in Seitenansicht und im Querschnitt dargestellt. Die Figur 2 zeigt eine Vorrichtung 14 zum Laminieren der Folienanordnung 1. Auf die Folienanordnung 1 werden an Pressblechhalteblöcken 15 angeordnete erste Pressbleche 8.1 und an Kühlblöcken 16 angeordnete Kühlflächen 10 aufgepresst und die Folienanordnung 1 dadurch laminiert.

Rechts und links der Pressblechhalteblöcke 15 und der Kühlblöcke 16 wird die Folienanordnung 1 von mehreren Klemmstückpaaren 17 gehalten, die nach Auseinanderbewegen der Pressblechhalteblöcke 15 mit den ersten Pressblechen 8.1 und der Kühlblöcke 16 mit den Kühlflächen 10 durch Bewegung in Vorschubrichtung 3 den Transport der Folienanordnung 1 um den vorgesehenen Schritt des Laminierabschnittes 9 durchführen.

Zwischen dem Pressblechhalteblock 15 und dem ersten Pressblech 8.1 ist eine Heizplatte 18 angeordnet, die das erste Pressblech 8.1 direkt aufheizt auf eine geforderte Laminiertemperatur. Jeder Pressblechhalteblock 15 ist an einen ersten Presstisch 19.1 montiert. Die ersten Pressbleche 8.1 sind an die Heizplatten 18 so montiert, dass Pressblechhalteblock 15, Heizplatte 18 und ein Pressblechrand 20 auf einer dem Kühlblock 16 zugewandten Seite übereinander in Bewegungsrichtung der ersten Presstische 19.1 einen geraden Abschluss bilden, so dass die Kühlblöcke 16 mit ihren Kühlflächen 10 auf den zuvor erwärmten Laminierabschnitt 9 mit einem Abstand von 1 mm vom Pressblechrand 20 aufsetzen können. Damit setzen die Kühlflächen 10 im Gitter 5 auf. Die Kühlblöcke 16 sind an je einem zweiten Presstisch 19.2 befestigt. Sowohl die ersten Presstische 19.1 als auch die zweiten Presstische 19.2 sind senkrecht zu einer Oberfläche der Folienanordnung 1 beweglich bzw. angetrieben.

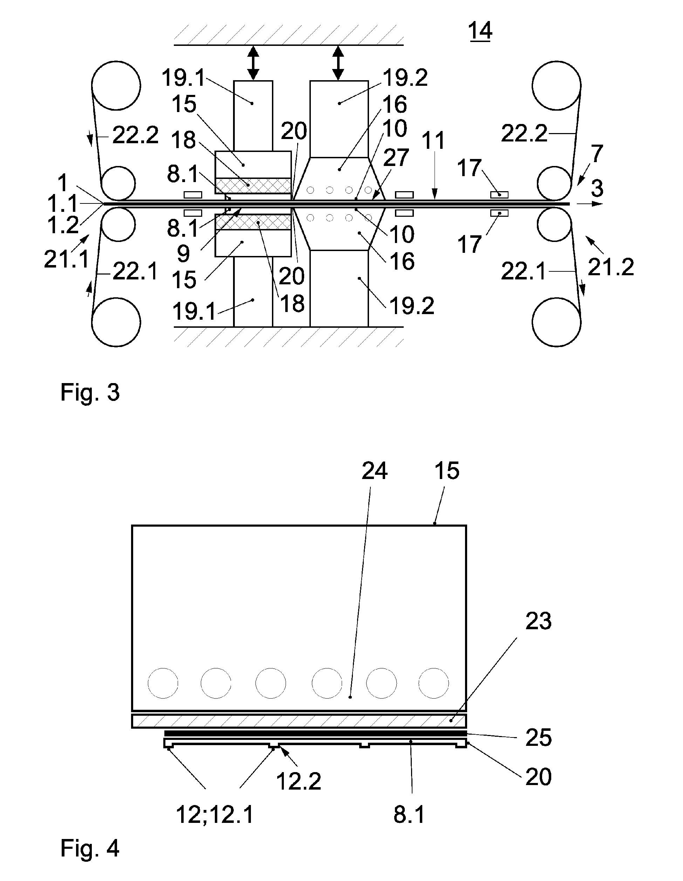

In Figur 3 ist die Darstellung in Figur 2 so ergänzt, dass in Vorschubrichtung 3 vor den Pressblechhalteblöcke 15 eine Haltebandzuführvorrichtung 21.1 und in Vorschubrichtung 3 nach den Kühlblöcken 16 eine Haltebandabführvorrichtung 21.2 angeordnet ist, wodurch auf jede Oberfläche der Folienanordnung 1 jeweils ein Halteband 22.1, 22.2, auch als Releaseband oder Releasefolie bezeichnet, aufbringbar und nach dem Laminieren und Abkühlen wieder abziehbar ist. Das Halteband 22.1, 22.2 ist im Beispiel eine 0,025 mm dicke und mit Antihaftmaterial beschichtete Polyesterfolie. Bei Anwendung von Haltebändern 22.1, 22.2 lassen sich sehr vorteilhaft blattartige Folienanordnungen 1, lückenlos auf das untere Halteband 22.1 aufgelegt, laminieren.

Mit dem Pressblechhalteblock 15 in Figur 4 ist eine Isolierlage 23 verbunden, die das indirekt aufgeheizte erste Pressblech 8.1 bedingt thermisch isoliert von einer unbeheizten, im Beispiel wassergekühlten Kühlzone 24 im Pressblechhalteblock 15. Eine Dicke der Isolierlage 23 und damit eine thermische Isolierwirkung sind wählbar. Im Beispiel weist die Isolierlage 23 eine Dicke von 0,3 mm auf und besteht aus einer temperaturbeständigen thermoplastischen Polyurethanfolie. Die Isolierlage 23 übernimmt auch eine Ebenheitsausgleichsfunktion bezüglich der beim Laminieren aufeinander pressenden ersten Pressbleche 8.1. Die ersten Pressbleche 8.1 bestehen im Beispiel aus gehärtetem Stahl und sind 0,8 mm dick. Im Beispiel ist zwischen erstem Pressblech 8.1 und Isolierlage 23 eine 0,3 mm dicke Kupferfolie als Speicherblech 25 angeordnet. Das erste Pressblech 8.1 und das Speicherblech 25 werden im Beispiel durch eine separate, angedrückte Heizplatte 18 indirekt auf 190°C aufgeheizt.

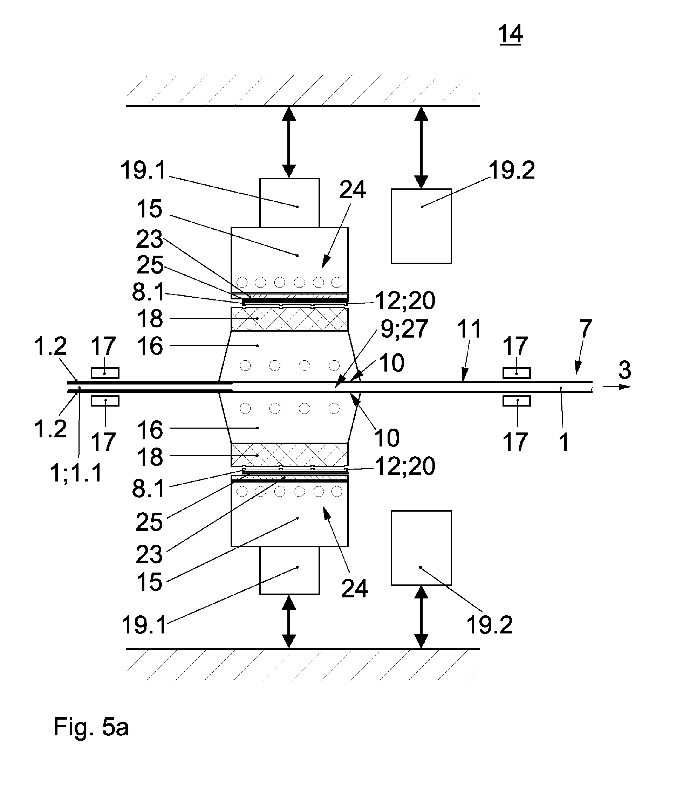

In Figur 5a pressen zwei Pressblechhalteblöcke 15 auf Kühlblöcke 16, die entgegen der Vorschubrichtung 3 der Folienanordnung 1 auf die eigentliche Laminierposition verschoben wurden und auf dieser Position den aufgeheizten Laminierabschnitt 9 kühlen. Die Pressblechhalteblöcke 15 wiederum werden durch erste Presstische 19.1 in Richtung der Folienanordnung 1 gedrückt. Auf jeder der, der Folienanordnung 1 abgewandten Flächen der Kühlblöcke 16 ist je eine Heizplatte 18 montiert, auf welche die ersten Pressbleche 8.1 der Pressblechhalteblöcke 15 aufsetzen, so dass während des Kühlens der Folienanordnung 1 die ersten Pressbleche 8.1 indirekt aufgeheizt werden.

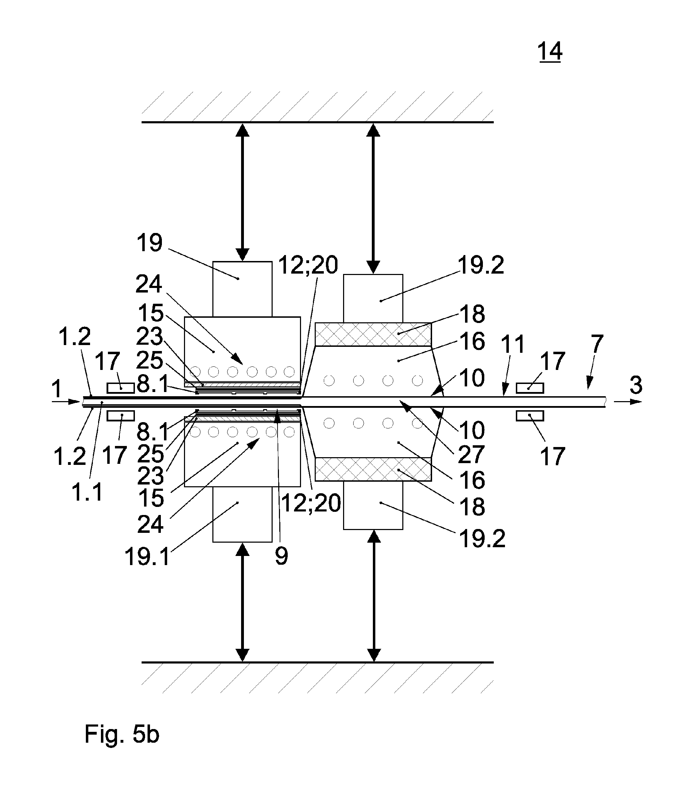

Bei dem anschließenden Transportschritt heben die Pressblechhalteblöcke 15 von den Heizplatten 18 ab und die zangenartig geschlossenen Kühlblöcke 16 bewegen sich in Vorschubrichtung 3 und fördern die Folienanordnung 1 um einen Laminierabschnitt 9 weiter. Anschließend setzen die aufgeheizten ersten Pressbleche 8.1 beidseitig auf die Folienanordnung 1 zum Erwärmen auf, wie in Figur 5b dargestellt. Eine Erwärmungsdauer, das heißt eine Heizphase, beträgt im Beispiel für das Material Polycarbonat 15 Sekunden. Zum Abschluss der Heiz- und Vorkühlphase weist der laminierte Laminierabschnitt 9 bereits eine Temperatur von kleiner 160° C auf.

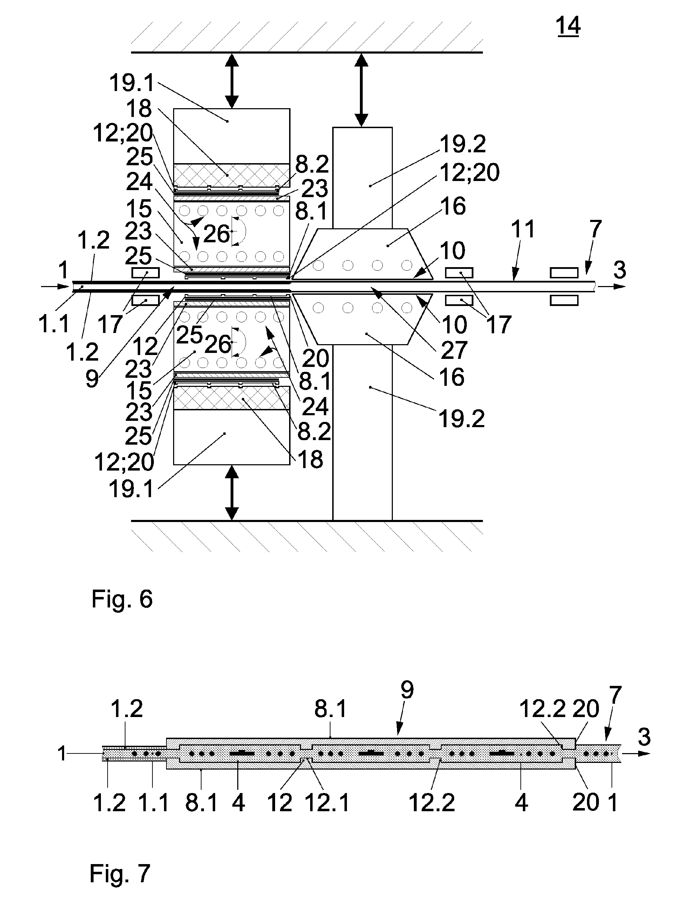

Eine weitere Gestaltungsform einer Vorrichtung 14 zum Laminieren mit indirekt geheizten ersten Pressblechen 8.1 und zweiten Pressblechen 8.2 ist in Figur 6 dargestellt. Die Pressbleche 8.1, 8.2 sind jeweils beidseitig der um einen Winkel von 180° drehbaren und durch Wasser gekühlten Kühlzonen 24 der Pressblechhalteblöcke 15 angebracht, wobei Drehachsen 26 parallel zur Oberfläche der Folienanordnung 1 und quer zur Vorschubrichtung 3 liegen.

Während die ersten Pressbleche 8.1 den Laminierabschnitt 9 aufheizen und unter vorgegebenem Laminierdruck zusammenpressen, werden zweite Pressbleche 8.2 durch die an den ersten Presstischen 19.1 angebrachten Heizplatten 18 indirekt aufgeheizt. Unmittelbar neben den ersten Pressblechen 8.1 und den Pressblechhalteblöcken 15 sitzen auf der Folienanordnung 1 die an den Kühlblöcken 16 befestigten Kühlflächen 10 auf und kühlen unter einem vorgegebenen Kühldruck den durch die Förderbewegung der Klemmstückpaare 17 um einen Laminierabschnitt 9 geförderten und noch aufgeheizten Kühlbereich 27 ab. Die Kühlblöcke 16 werden wiederum durch zweite Presstische 19.2 an den zu kühlenden Kühlbereich 27 gedrückt.

Nach Ende einer Laminier- und Vorkühlphase heben sich die ersten Presstische 19.1 von den Pressblechhalteblöcken 15 ab und die Pressblechhalteblöcke 15 andererseits heben sich von dem Laminierabschnitt 9 der Folienanordnung 1 soweit ab, dass eine Drehung der Pressblechhalteblöcke 15 um einen Winkel von 180° möglich ist. Zwischenzeitlich heben auch die Kühlblöcke 16 sich von der Folienanordnung 1 etwas ab und die Folienanordnung 1 wird um einen Laminierabschnitt 9 gefördert. Anschließend setzen die aufgeheizten zweiten Pressbleche 8.2 und die Kühlblöcke 16 mit ihren Kühlflächen 10 auf den Laminierabschnitt 9 und den zu kühlenden Kühlbereich 27 unter Nachdrücken aller Presstische 19.1, 19.2 auf.

Figur 7 gibt ein Beispiel für eine Gestaltung der Pressbleche 8.1, 8.2 mit Rasternocken 12 an. Die Rasternocken 12 verlaufen quer zur Vorschubrichtung 3 der Folienanordnung 1 über die gesamte Breite des Pressbleches 8.1, 8.2. Die Rasternocken 12 weisen im Beispiel eine Breite 12.1 von 1 mm auf, ein Abstand von Mitte zu Mitte beträgt 60 mm; das ist die Länge des Rasterschrittes 6. Am Anfang und am Ende der Länge des Pressbleches 8.1, 8.2 und in jedem Gitter 5 ist jeweils eine Rasternocke 12 angeordnet. Die Rasternocken 12 greifen exakt in die Gittermitten 5.1 der Folienanordnung 1 in Vorschubrichtung 3 ein. Eine Höhe 12.2 der Rasternocken 12 beträgt im Beispiel 0,03 mm.

### Bezugszeichenliste

- 1: Folienanordnung
- 1.1: Substratfolie
- 1.2: Deckfolie
- 2: Indexlöcher
- 3: Vorschubrichtung
- 4: Flächenstücke
- 5: Gitter
- 5.1: Gittermitte
- 6: Rasterschritt
- 7: Transportebene
- 8.1, 8.2: Pressblech
- 9: Laminierabschnitt
- 10: Kühlfläche
- 11: laminierter Folienanordnungsbereich
- 12: Rasternocken
- 12.1: Breite der Rasternocken
- 12.2: Höhe der Rasternocken
- 13: Vertiefung
- 14: Vorrichtung zum Laminieren
- 15: Pressblechhalteblock
- 16: Kühlblock
- 17: Klemmstückpaare
- 18: Heizplatte
- 19.1, 19.2: Presstisch
- 20: Pressblechrand
- 21.1: Haltebandzuführvorrichtung
- 21.2: Haltebandabführvorrichtung
- 22.1, 22.2: Halteband
- 23: Isolierlage
- 24: Kühlzone
- 25: Speicherblech
- 26: Drehachse
- 27: Kühlbereich

## Patentansprüche

1. Vorrichtung (14) zum Laminieren einer folienbandartigen mehrschichtigen thermoplastischen Folienanordnung (1), welche aus einem thermoplastischen Folienband oder aus einer Mehrzahl folienbandartig aufgereihter blattartiger Folienanordnungen gebildet ist, wobei die Folienanordnung (1) mindestens in Vorschubrichtung (3) in gleichmäßige Rasterschritte (6) eingeteilte Flächenstücke (4) aufweist, die durch Gitter (5) beabstandet sind und wobei die Lamination unter Druck und Erhitzung eines Laminierabschnittes (9) der Folienanordnung (1) auf eine Temperatur im Erweichungsbereich der Thermoplaste und anschließender Abkühlung des erhitzten Laminierabschnittes (9) unter Druck stattfindet, umfassend aufheizbare Pressbleche (8.1, 8.2) und Kühlflächen (10), wobei eine Breite dieser Pressbleche (8.1, 8.2) und Kühlflächen (10) größer oder gleich einer Breite der Folienanordnung (1) ist, wobei die Folienanordnung (1) in ihrer Lage zu den Pressblechen (8.1, 8.2) so angeordnet ist, dass Pressblechränder (20) in Gittermitte (5.1) liegen und mit einem Abstand bis zu 3 mm neben einem Pressblechrand (20) und im gleichen Gitter (5) beginnend die Kühlflächen (10) angeordnet sind, wobei eine Länge der Kühlflächen (10) größer oder gleich einer Länge der Pressbleche (8.1, 8.2) ist, wobei je ein Pressblech (8.1, 8.2) und je eine Kühlfläche (10) beidseitig der Folienanordnung (1) angeordnet sind, wobei die Pressbleche (8.1, 8.2) an durch erste Presstische (19.1) bewegbaren oder gestützten Pressblechhalteblöcken (15) befestigt sind, in welchen eine Kühlzone (24) angeordnet ist und wobei die Kühlflächen (10) Bestandteil von durch zweite Presstische (19.2) bewegbaren oder gestützten Kühlblöcken (16) sind.

2. Vorrichtung (14) nach Anspruch 1,
**dadurch gekennzeichnet,**
**dass** zwischen dem Pressblechhalteblock (15) und dem Pressblech (8.1, 8.2) ein Speicherblech (25) angeordnet ist.

3. Vorrichtung (14) nach Anspruch 1 oder 2,
**dadurch gekennzeichnet,**
**dass** zwischen dem Pressblechhalteblock (15) und dem Pressblech (8.1, 8.2) eine Isolierlage (23) angeordnet ist.

4. Vorrichtung (14) nach einem der Ansprüche 1 bis 3,
**dadurch gekennzeichnet,**
**dass** auf dem Kühlblock (16) gegenüberliegend der Kühlfläche (10) eine Heizplatte (18) angeordnet ist.

5. Vorrichtung (14) nach einem der vorhergehenden Ansprüche,
**dadurch gekennzeichnet,**
**dass** die Kühlblöcke (16) unter die Pressblechhalteblöcke (15) verschiebbar sind.

6. Vorrichtung (14) nach einem der vorhergehenden Ansprüche,
**dadurch gekennzeichnet,**
**dass** der Pressblechhalteblock (15) um eine Drehachse (26) parallel zu einer Oberfläche der Folienanordnung (1) und senkrecht zur Vorschubrichtung (3) um 180° drehbar gelagert ist.

7. Vorrichtung (14) nach Anspruch 6,
**dadurch gekennzeichnet,**
**dass** an gegenüberliegenden Seiten des Pressblechhalteblocks (15) je ein Pressblech (8.1, 8.2) angeordnet ist.

8. Vorrichtung (14) nach Anspruch 6 oder 7,
**dadurch gekennzeichnet,**
**dass** an den die Pressblechhalteblöcke (15) pressenden ersten Presstischen (19.1) an einer zu den Pressblechhalteblöcken (15) weisenden Seite Heizplatten (18) angeordnet sind.

9. Verfahren zum Laminieren einer folienbandartigen mehrschichtigen thermoplastischen Folienanordnung (1), welche aus einem thermoplastischen Folienband oder aus einer Mehrzahl folienbandartig aufgereihter blattartiger Folienanordnungen gebildet ist, wobei die Folienanordnung (1) mindestens in Vorschubrichtung (3) in gleichmäβige Rasterschritte (6) eingeteilte Flächenstücke (4) aufweist, die durch Gitter (5) beabstandet sind und wobei die Folienanordnung (1) unter Druck auf eine Temperatur im Erweichungsbereich der Thermoplaste erhitzt wird und anschließend unter Druck mittels Kühlflächen (10), die Bestandteil von durch zweite Presstische (19.2) bewegbaren oder gestützten Kühlblöcken (16) sind, abgekühlt wird,
**dadurch gekennzeichnet,**
**dass** ein Laminierabschnitt (9) der Folienanordnung (1) mittels an beiden Seiten der Folienanordnung (1) angeordneter aufgeheizter Pressbleche (8.1, 8.2), die an durch erste Presstische (19.1) bewegbaren oder gestützten Pressblechhalteblöcken (15) befestigt sind, erwärmt und zusammengepresst wird, wobei zumindest ein Pressblech (8.1, 8.2) in Richtung der Folienanordnung (1) bewegt wird und dass anschließend die Pressbleche (8.1, 8.2) durch in den Pressblechhalteblöcken (15) angeordnete Kühlzonen (24) gekühlt werden, wobei der erwärmte Laminierabschnitt (9) mittels der Pressbleche (8.1, 8.2) zusammengepresst und zumindest vorgekühlt wird.

10. Verfahren nach Anspruch 9,
**dadurch gekennzeichnet,**
**dass** die Folienanordnung (1) mittels einer Mehrzahl von Klemmstückpaaren (17), welche entlang der Folienanordnung (1) angeordnet sind, in einer Transportebene (7) gehalten wird und durch eine Bewegung der Klemmstückpaare (17) in Vorschubrichtung (3) die Folienanordnung (1) in Vorschubrichtung (3) transportiert wird.

11. Verfahren nach Anspruch 9 oder 10,
**dadurch gekennzeichnet,**
**dass** die Pressbleche (8.1, 8.2) durch ein temporäres Aufsetzen auf an den Kühlblöcken (16) und/oder an den ersten Presstischen (19.1) angeordneten Heizplatten (18) aufgeheizt werden.

12. Verfahren nach einem der Ansprüche 9 bis 11,
**dadurch gekennzeichnet,**
**dass** nach dem Erwärmen und Zusammenpressen des Laminierabschnitts (9) und einem nachfolgenden Zusammenpressen und Vorkühlen mittels der Pressbleche (8.1, 8.2) in einem ersten Schritt die an den Pressblechhalteblöcken (15) befestigten Pressbleche (8.1, 8.2) mittels der ersten Presstische (19.1) auseinander gefahren werden, die Kühlblöcke (16) entgegen der Vorschubrichtung (3) zum erwärmten Laminierabschnitt (9) und unter die Pressbleche (8.1, 8.2) verschoben werden und mittels der ersten Presstische (19.1) und der daran angeordneten Pressblechhalteblöcke (15) und Pressbleche (8.1, 8.2) Kühlflächen (10) auf den Laminierabschnitt (9) aufgepresst werden, wobei die Pressbleche (8.1, 8.2) auf Heizplatten (18), welche auf den Kühlblöcken (16) gegenüberliegend der Kühlfläche (10) angeordnet sind, aufgepresst und aufgeheizt werden, und in einem zweiten Schritt die an den Pressblechhalteblöcken (15) befestigten Pressbleche (8.1, 8.2) mittels der ersten Presstische (19.1) erneut auseinander gefahren werden und die noch zangenartig auf dem Laminierabschnitt (9) aufgesetzten Kühlblöcke (16) unter Mitnahme der Folienanordnung (1) um einen Laminierabschnitt (9) in Vorschubrichtung (3) verschoben werden.

13. Verfahren nach einem der Ansprüche 9 bis 11,
**dadurch gekennzeichnet,**
**dass** der Laminierabschnitt (9) mittels der an den Pressblechhalteblöcken (15) angeordneten Pressbleche (8.1, 8.2) erwärmt und zusammengepresst und danach weiterhin zusammengepresst und vorgekühlt wird, wobei die Pressblechhalteblöcke (15) an gegenüberliegenden Seiten je ein Pressblech (8.1, 8.2) aufweisen, wobei erste Pressbleche (8.1) auf die Folienanordnung aufgepresst werden und den ersten Presstischen (19.1) und daran angeordneten Heizplatten (18) zugewandte zweite Pressbleche (8.2) mittels der Heizplatten (18) aufgeheizt werden, danach sowohl die ersten Pressbleche (8.1) als auch die Kühlflächen (10) mittels der ersten Presstische (19.1) und der zweiten Presstische (19.2) auseinander gefahren werden, die Pressblechhalteblöcke (15) jeweils um 180° um eine Drehachse (26) parallel zur Oberfläche der Folienanordnung (1) und senkrecht zur Vorschubrichtung (3) gedreht werden und gleichzeitig die Folienanordnung (1) mittels Klemmstückpaaren (17) um einen Laminierabschnitt (9) in Vorschubrichtung (3) bewegt wird und danach die zweiten Pressbleche (8.2) und die Kühlflächen (10) wieder auf die Folienanordnung (1) aufgepresst werden.

14. Verfahren nach einem der Ansprüche 9 bis 11,
**dadurch gekennzeichnet,**
**dass** der Laminierabschnitt (9) mittels der an den Pressblechhalteblöcken (15) angeordneten Pressbleche (8.1, 8.2) erwärmt und zusammengepresst und danach weiterhin zusammengepresst und abgekühlt wird, wobei die Pressblechhalteblöcke (15) an gegenüberliegenden Seiten je ein Pressblech (8.1, 8.2) aufweisen, wobei erste Pressbleche (8.1) auf die Folienanordnung aufgepresst werden und den ersten Presstischen (19.1) und daran angeordneten Heizplatten (18) zugewandte zweite Pressbleche (8.2) mittels der Heizplatten (18) aufgeheizt werden, danach die ersten Pressbleche (8.1) mittels der ersten Presstische (19.1) auseinander gefahren werden, die Pressblechhalteblöcke (15) jeweils um 180° um eine Drehachse (26) parallel zur Oberfläche der Folienanordnung (1) und senkrecht zur Vorschubrichtung (3) gedreht werden und gleichzeitig die Folienanordnung (1) mittels Klemmstückpaaren (17) um einen Laminierabschnitt (9) in Vorschubrichtung (3) bewegt wird und danach die zweiten Pressbleche (8.2) wieder auf die Folienanordnung (1) aufgepresst werden.

## Claims

1. Device (14) for laminating a film-tape-like multilayer thermoplastic film arrangement (1) which is formed from a thermoplastic film-tape or from a plurality of sheet-like film arrangements consecutively arranged in the manner of a film-tape, wherein the film arrangement (1) has surface portions (4) divided into uniform lattice steps (6) at least in the feed direction (3), said surface portions being separated by means of grids (5), and wherein the lamination takes place under the application of pressure and heating of a laminating section (9) of the film arrangement (1) up to a temperature in the softening region of the thermoplastic and subsequent cooling of the heated laminating section (9) under pressure, comprising heatable press plates (8.1, 8.2) and cooling surfaces (10), wherein a width of said press plates (8.1, 8.2) and cooling surfaces (10) is greater than or equal to a width of the film arrangement (1), wherein the film arrangement (1) is arranged in the position thereof relative to the press plates (8.1, 8.2) such that press plate edges (20) lie at the grid centre (5.1) and the cooling surfaces (10) are arranged with a distance up to 3 mm next to a press plate edge (20) and beginning in the same grid (5), wherein a length of the cooling surfaces (10) is greater than or equal to a length of the press plates (8.1, 8.2), wherein one press plate (8.1, 8.2) and one cooling surface (10) are respectively arranged on both sides of the film arrangement (1), wherein the press plates (8.1, 8.2) are fixed to press plate holding blocks (15) that can be moved or are supported by first press tables (19.1) and in which a cooling zone (24) is arranged, and wherein the cooling surfaces (10) are part of cooling blocks (16) that can be moved or are supported by second press tables (19.2).

2. The device (14) according to Claim 1,
**characterised in that**
a storage plate (25) is arranged between the press plate holding block (15) and the press plate (8.1, 8.2).

3. The device (14) according to Claim 1 or 2,
**characterised in that**
an insulating layer (23) is arranged between the press plate holding block (15) and the press plate (8.1, 8.2).

4. The device (14) according to one of Claims 1 to 3,
**characterised in that**
a heating plate (18) is arranged on the cooling block (16) opposite to the cooling surface (10).

5. The device (14) according to one of the preceding claims,
**characterised in that**
the cooling blocks (16) can be displaced underneath the press plate holding blocks (15).

6. The device (14) according to one of the preceding claims,
**characterised in that**
the press plate holding block (15) is mounted so that it can rotate by 180° about a rotational axis (26) parallel to a surface of the film arrangement (1) and perpendicular to the feed direction (3).

7. The device (14) according to Claim 6,
**characterised in that**
one press plate (8.1, 8.2) is arranged on each opposite side of the press plate holding block (15).

8. The device (14) according to Claim 6 or 7,
**characterised in that**
heating plates (18) are arranged on the first press tables (19.1) pressing the press plate holding blocks (15) on a side facing towards the press plate holding blocks (15).

9. Method for laminating a film-tape-like multi-layer thermoplastic film arrangement (1) which is formed from a thermoplastic film-tape or from a plurality of sheet-like film arrangements consecutively arranged in the manner of a film-tape, wherein the film arrangement (1) has surface portions (4) divided into uniform lattice steps (6) at least in the feed direction (3), said surface portions being separated by means of grids (5), and wherein the film arrangement (1) is heated under pressure up to a temperature in the softening region of the thermoplastic and is subsequently cooled under pressure by means of cooling surfaces (10) which are part of cooling blocks (16) that can be moved or are supported by second press tables (19.2),
**characterised in that**
a laminating section (9) of the film arrangement (1) is heated and pressed together by means of heated press plates (8.1, 8.2) which are arranged on both sides of the film arrangement (1) and are fixed to press plate holding blocks (15) that can be moved or are supported by first press tables (19.1), wherein at least one press plate (8.1, 8.2) is moved in the direction of the film arrangement (1) and **in that** the press plates (8.1, 8.2) are subsequently cooled by cooling zones (24) arranged in the press plate holding blocks (15), wherein the heated laminating section (9) is pressed together by means of the press plates (8.1, 8.2) and is at least pre-cooled.

10. The method according to Claim 9,
**characterised in that**
the film arrangement (1) is held in a transport plane (7) by means of a plurality of clamping piece pairs (17) arranged along the film arrangement (1), and the film arrangement (1) is transported in the feed direction (3) by means of a movement of the clamping piece pairs (17) in the feed direction (3).

11. The method according to Claim 9 or 10,
**characterised in that**
the press plates (8.1, 8.2) are heated by being temporarily placed onto heating plates (18) arranged on the cooling blocks (16) and/or on the first press tables (19.1).

12. The method according to one of Claims 9 to 11,
**characterised in that**
after the heating and pressing together of the laminating section (9) and a subsequent pressing together and preliminary cooling by means of the press plates (8.1, 8.2), in a first step the press plates (8.1, 8.2) fixed to the press plate holding blocks (15) are moved apart by means of the first press tables (19.1), the cooling blocks (16) are displaced opposite to the feed direction (3) towards the heated laminating section (9) and underneath the press plates (8.1, 8.2), and by means of the first press tables (19.1) and the press plate holding blocks (15) and press plates (8.1, 8.2) arranged thereon cooling surfaces (10) are pressed onto the laminating section (9), wherein the press plates (8.1, 8.2) are pressed onto heating plates (18) arranged on the cooling blocks (16) opposite the cooling surface (10) and are heated up, and in a second step the press plates (8.1, 8.2) fixed to the press plate holding blocks (15) are moved apart once again by means of the first press tables (19.1) and the cooling blocks (16) still placed on top of the laminating section (9) like a pair of tongs are displaced in the feed direction (3) by one laminating section (9), taking the film arrangement (1) along with them.

13. The method according to one of Claims 9 to 11,
**characterised in that**
the laminating section (9) is heated and pressed together by means of the press plates (8.1, 8.2) arranged on the press plate holding blocks (15) and is then further pressed together and pre-cooled, wherein the press plate holding blocks (15) have one press plate (8.1, 8.2) on each opposite side, wherein first press plates (8.1) are pressed onto the film arrangement and second press plates (8.2) facing towards the first press tables (19.1) and heating plates (18) arranged thereon are heated up by means of the heating plates (18), after which both the first press plates (8.1) and the cooling surfaces (10) are moved apart by means of the first press tables (19.1) and the second press tables (19.2), the press plate holding blocks (15) are each rotated by 180° about a rotational axis (26) parallel to the surface of the film arrangement (1) and perpendicular to the feed direction (3) and the film arrangement (1) is simultaneously moved in the feed direction (3) by one laminating section (9) by means of clamping piece pairs (17) and then the second press plates (8.2) and the cooling surfaces (10) are pressed onto the film arrangement (1) again.

14. The method according to one of Claims 9 to 11,
**characterised in that**
the laminating section (9) is heated and pressed together by means of the press plates (8.1, 8.2) arranged on the press plate holding blocks (15) and is then further pressed together and cooled, wherein the press plate holding blocks (15) have one press plate (8.1, 8.2) on each opposite side, wherein first press plates (8.1) are pressed onto the film arrangement and second press plates (8.2) facing towards the first press tables (19.1) and heating plates (18) arranged thereon are heated up by means of the heating plates (18), after which the first press plates (8.1) are moved apart by means of the first press tables (19.1), the press plate holding blocks (15) are each rotated by 180° about a rotational axis (26) parallel to the surface of the film arrangement (1) and perpendicular to the feed direction (3) and the film arrangement (1) is simultaneously moved in the feed direction (3) by one laminating section (9) by means of clamping piece pairs (17) and then the second press plates (8.2) are pressed onto the film arrangement (1) again.

## Revendications

1. Dispositif (14) de laminage d'un agencement (1) de film thermoplastique multicouche à la manière d'une bande de film et qui est formé d'une bande de film thermoplastique ou d'une pluralité d'agencements de film à la manière d'un feuillet enfilés à la manière d'une bande de film, dans lequel l'agencement (1) de film présente des pièces (4) de surface qui sont divisées en des étapes (6) de trame uniformes au moins dans la direction (3) de transfert et qui sont espacées par des grilles (5), et dans lequel le laminage se déroule sous pression et en chauffant une section (9) de laminage de l'agencement (1) de film à une température dans la plage de ramollissement de la matière plastique et en refroidissant ensuite la section (9) de laminage chauffée sous pression, comportant des plaques (8.1, 8.2) de pressage chauffables et des surfaces (10) de refroidissement, une largeur desdites plaques (8.1, 8.2) de pressage et desdites surfaces (10) de refroidissement étant supérieure ou égale à une largeur de l'agencement (1) de film, dans lequel l'agencement (1) de film est disposé dans sa position relatif aux plaques (8.1, 8.2) de pressage de façon que des bords (20) de plaque de pressage se situent au milieu (5.1) de la grille et les surfaces (10) de refroidissement sont disposés avec une distance jusqu'à 3 mm à côté d'un bord (20) de plaque de pressage et commençant dans la même grille (5), une longueur des surfaces (10) de refroidissement étant supérieure ou égale à une longueur des plaques (8.1, 8.2) de pressage, dans lequel une plaque (8.1, 8.2) de pressage et une surface (10) de refroidissement sont respectivement disposées des deux côtés de l'agencement (1) de film, les plaques (8.1, 8.2) de pressage étant fixées à des blocs (15) de retenue de plaque de pressage qui peuvent être mus ou sont supportés par de premières tables (19.1) de pressage et dans lesquels une zone (24) de refroidissement est disposée, et les surfaces (10) de refroidissement faisant partie de blocs (16) de refroidissement qui peuvent être mus ou sont supportés par de deuxièmes tables (19.2) de pressage.

2. Dispositif (14) selon la revendication 1,
**caractérisé en ce qu'**
une plaque (25) de stockage est disposée entre le bloc (15) de retenue de plaque de pressage et la plaque (8.1, 8.2) de pressage.

3. Dispositif (14) selon la revendication 1 ou 2,
**caractérisé en ce qu'**
une couche (23) isolante est disposée entre le bloc (15) de retenue de plaque de pressage et la plaque (8.1, 8.2) de pressage.

4. Dispositif (14) selon l'une quelconque des revendications 1 à 3,
**caractérisé en ce qu'**
une plaque (18) de chauffage est disposée sur le bloc (16) de refroidissement en vis-à-vis de la surface (10) de refroidissement.

5. Dispositif (14) selon l'une quelconque des revendications précédentes,
**caractérisé en ce que**
les blocs (16) de refroidissement peuvent être déplacés sous les blocs (15) de retenue de plaque de pressage.

6. Dispositif (14) selon l'une quelconque des revendications précédentes,
**caractérisé en ce que**
le bloc (15) de retenue de plaque de pressage est monté de façon à pouvoir pivoter de 180° autour d'un axe (26) de rotation parallèlement à une surface de l'agencement (1) de film et perpendiculairement à la direction (3) de transfert.

7. Dispositif (14) selon la revendication 6,
**caractérisé en ce qu'**
une plaque (8.1, 8.2) de pressage est respectivement disposée sur des côtés opposés du bloc (15) de retenue de plaque de pressage.

8. Dispositif (14) selon la revendication 6 ou 7,
**caractérisé en ce que**
des plaques (18) de chauffage sont disposées aux premières tables (19.1) de pressage qui pressent les blocs (15) de retenue de plaque de pressage, sur un côté dirigé vers les blocs (15) de retenue de plaque de pressage.

9. Procédé de laminage d'un agencement (1) de film thermoplastique multicouche à la manière d'une bande de film et qui est formé d'une bande de film thermoplastique ou d'une pluralité d'agencements de film à la manière d'un feuillet enfilés à la manière de bandes de film, dans lequel l'agencement (1) de film présente des pièces (4) de surface qui sont divisées en des étapes (6) de trame uniformes au moins dans la direction (3) de transfert et qui sont espacées par des grilles (5), et dans lequel l'agencement (1) de film est chauffé sous pression à une température dans la plage de ramollissement de la matière plastique et est ensuite refroidi sous pression par des surfaces (10) de refroidissement qui font partie de blocs (16) de refroidissement qui peuvent être mus ou sont supportés par de deuxièmes tables (19.2) de pressage,
**caractérisé en ce qu'**
une section (9) de laminage de l'agencement (1) de film est chauffée et compressée par des plaques (8.1, 8.2) de pressage chauffées qui sont disposées des deux côtés de l'agencement (1) de film et sont fixées à des blocs (15) de retenue de plaque de pressage qui peuvent être mus ou sont supportés par de premières tables (19.1) de pressage, au moins une plaque (8.1, 8.2) de pressage étant mue vers l'agencement (1) de film, et **en ce que** les plaques (8.1, 8.2) de pressage sont ensuite refroidies par des zones (24) de refroidissement disposées dans les blocs (15) de retenue de plaque de pressage, la section (9) de laminage chauffée étant compressée par les plaques (8.1, 8.2) de pressage et étant au moins pré-refroidie.

10. Procédé selon la revendication 9,
**caractérisé en ce que**
l'agencement (1) de film est maintenu dans un plan (7) de transport par une pluralité de paires (17) de pièces de serrage qui sont disposées le long de l'agencement (1) de film, et l'agencement (1) de film est transporté dans la direction (3) de transfert par un mouvement des paires (17) de pièces de serrage dans la direction (3) de transfert.

11. Procédé selon la revendication 9 ou 10,
**caractérisé en ce que**
les plaques (8.1, 8.2) de pressage sont chauffées en les posant temporairement sur des plaques (18) de chauffage disposées aux blocs (16) de refroidissement et/ou aux premières tables (19.1) de pressage.

12. Procédé selon l'une quelconque des revendications 9 à 11,
**caractérisé en ce qu'**
après le chauffage et la compression de la section (9) de laminage et une compression et un pré-refroidissement subséquents par les plaques (8.1, 8.2) de pressage, dans une première étape, les plaques (8.1, 8.2) de pressage fixées aux blocs (15) de retenue de plaque de pressage sont écartées par les premières tables (19.1) de pressage, les blocs (16) de refroidissement sont déplacés contre la direction (3) de transfert vers la section (9) de laminage chauffée et sous les plaques (8.1, 8.2) de pressage, et, par les premières tables (19.1) de pressage et par les blocs (15) de retenue de plaque de pressage et les plaques (8.1, 8.2) de pressage y disposés, des surfaces (10) de refroidissement sont pressées sur la section (9) de laminage, les plaques (8.1, 8.2) de pressage étant pressées sur des plaques (18) de chauffage, qui sont disposées sur les blocs (16) de refroidissement en vis-à-vis de la surface (10) de refroidissement, et étant chauffées, et, dans une deuxième étape, les plaques (8.1, 8.2) de pressage qui sont fixées aux blocs (15) de retenue de plaque de pressage sont écartées de nouveau par les premières tables (19.1) de pressage et les blocs (16) de refroidissement qui sont encore posés sur la section (9) de laminage comme une pince sont déplacés d'une section (9) de laminage dans la direction (3) de transfert, en entraînant l'agencement (1) de film.

13. Procédé selon l'une quelconque des revendications 9 à 11,
**caractérisé en ce que**
la section (9) de laminage est chauffée et compressée par les plaques (8.1, 8.2) de pressage qui sont disposées aux blocs (15) de retenue de plaque de pressage et est ensuite compressée à continuation et pré-refroidi, les blocs (15) de retenue de plaque de pressage respectivement présentant une plaque (8.1, 8.2) de pressage sur des côtés opposés, de premières plaques (8.1) de pressage étant pressées sur l'agencement de film et de deuxièmes plaques (8.2) de pressage dirigées vers les premières tables (19.1) de pressage et vers des plaques (18) de chauffage y disposées sont chauffées par les plaques (18) de chauffage, ensuite de quoi tant les premières plaques (8.1) de pressage que les surfaces (10) de refroidissement sont écartées par les premières tables (19.1) de pressage et les deuxièmes tables (19.2) de pressage, les blocs (15) de retenue de plaque de pressage sont respectivement pivotés de 180° autour d'un axe (26) de rotation parallèlement à la surface de l'agencement (1) de film et perpendiculairement à la direction (3) de transfert, et l'agencement (1) de film est simultanément mu d'une section (9) de laminage dans la direction (3) de transfert par des paires (17) de pièces de serrage et les deuxièmes plaques (8.2) de pressage et les surfaces (10) de refroidissement sont ensuite de nouveau pressées sur l'agencement (1) de film.

14. Procédé selon l'une quelconque des revendications 9 à 11,
**caractérisé en ce que**
la section (9) de laminage est chauffée et compressée par les plaques (8.1, 8.2) de pressage disposées aux blocs (15) de retenue de plaque de pressage et est ensuite compressée à continuation et refroidie, les blocs (15) de retenue de plaque de pression respectivement présentant une plaque (8.1, 8.2) de pressage sur des côtés opposés, de premières plaques (8.1) de pressage étant pressées sur l'agencement de film et de deuxièmes plaques (8.2) de pressage dirigées vers les premières tables (19.1) de pressage et vers des plaques (18) de chauffage y disposées sont chauffées par les plaques (18) de chauffage, ensuite de quoi les premières plaques (8.1) de pressage sont écartées par les premières tables (19.1) de pressage, les blocs (15) de retenue de plaque de pressage sont respectivement pivotés de 180° autour d'un axe (26) de rotation parallèlement à la surface de l'agencement (1) de film et perpendiculairement à la direction (3) de transfert, et l'agencement (1) de film est simultanément mu d'une section (9) de laminage dans la direction (3) de transfert par des paires (17) de pièces de serrage et les deuxièmes plaques (8.2) de pressage sont ensuite de nouveau pressées sur l'agencement (1) de film.
